# EUROPEAN PATENT SPECIFICATION

(11) **EP 1 383 194 B1**
(45) Date of publication and mention of the grant of the patent: **19.05.2010**
(21) Application number: 03254506.3
(22) Date of filing: 18.07.2003
(51) Int. Cl.: H01M 8/10, C08G 75/02

(54) **Proton conductive solid polymer electrolyte and method for producing the same**
Protonleitender Festpolymerelektrolyt und Verfahren zu dessen Herstellung
Electrolyte solide polymère conducteur protonique et méthode de fabrication

(30) Priority: 18.07.2002 JP 2002209709
(43) Date of publication of application: 21.01.2004
(73) Proprietor: HONDA GIKEN KOGYO KABUSHIKI KAISHA, Minato-ku, Tokyo 107-8556 (JP)
(72) Inventor: Akita, Hiroshi Kabushiki Kaisha Honda, Wako-shi, Saitama-ken, 351-0193 (JP); Komiya, Teruaki Kabushiki Kaisha Honda, Wako-shi, Saitama-ken, 351-0193 (JP)
(74) Representative: Matthews, Derek Peter

(56) References cited:
- EP-A- 1 085 590
- EP-A1- 1 396 898
- WO-A-00/27513
- WO-A-01/63683
- WO-A-01/94450
- DE-A1- 19 817 374

## Description

### BACKGROUND OF THE INVENTION

### Field of the Invention:

The present invention relates to a proton conductive solid polymer electrolyte to be used for a variety of electrochemical cells including, for example, a fuel cell and a hydrogen and oxygen generator for generating hydrogen and oxygen by electrolyzing water, and a method for producing the same.

### Description of the Related Art:

In the case of the fuel cell, for example, an electrolyte is interposed between an anode to which the fuel gas containing hydrogen is supplied and a cathode to which the oxygen-containing gas such as air is supplied. The electrolyte moves the hydrogen ion (proton), which is generated by ionizing hydrogen contained in the fuel gas on the anode, to the cathode. In other words, the electrolyte serves as a proton conductor in the fuel cell.

A material, which is obtained by humidifying a perfluorosulfonic acid polymer membrane with liquid water, is widely known as an example of the proton conductor which acts as the electrolyte of the fuel cell. The proton conductivity of the membrane lowers as the membrane is dried. For this reason, in order to maintain the power generation characteristics of the fuel cell, the membrane is prevented from being dried by keeping the fuel gas and/or the oxygen-containing gas contained with steam to continuously replenish the membrane with water, and supplying a cooling medium into the fuel cell to maintain the operation temperature at 80° to 90° C.

In recent years, a composite electrolyte comprising a base material of basic solid polymer such as polybenzimidazole, the base material impregnated with liquid inorganic strong acid such as phosphoric acid (see United States Patent No. 5,525,436), and a composite electrolyte comprising a base material of meta-polyaniline and constructed in the same manner as described above (see Japanese Laid-Open Patent Publication No. 2001-160407) have been suggested.

The two types of the composite electrolytes described above have high proton conductivities even in a dried state. Therefore, it is unnecessary to use any humidifier. Further, because the fuel cell can be operated at high temperatures, the cooling system may be small. Therefore, the fuel cell system can also be constructed simply and small in size.

As well-known, H₂O is produced when the fuel cell is operated. When the fuel cell is operated at relatively low temperatures, for example, during the start-up operation or during the low output operation of the fuel cell, H₂O is in a form of liquid water.

Meanwhile, phosphoric acid has an extremely high degree of liquid absorption. Therefore, when the composite electrolyte as described above is adopted as an electrolyte of the fuel cell, a quantity of the H₂O which is produced by the operation of the fuel cell is absorbed by phosphoric acid. In particular, phosphoric acid absorbs the liquid during the low temperature operation such as the start-up operation and the low output operation. Therefore, the concentration of phosphoric acid is lowered, and the amount of phosphoric acid is increased. When the amount of phosphoric acid exceeds an amount which the base material of the composite electrolyte is capable of retaining, phosphoric acid begins to exude out from the composite electrolyte.

The exudate phosphoric acid is discharged outside of the fuel cell via the fuel gas passage which supplies the fuel gas to the anode, and/or via the oxygen-containing gas passage which supplies the oxygen-containing gas to the cathode. Namely, phosphoric acid outflows, and the concentration of phosphoric acid remaining in the base material of the composite electrolyte is lowered. Therefore, the proton conductivity of the composite electrolyte is lowered. Consequently, the internal resistance of the fuel cell rises, deteriorating the power generation characteristics of the fuel cell.

In order to improve the water absorption of such phosphoric acid, the following suggestion has been made in United States Patent No. 6,124,060 and Japanese Laid-Open Patent Publication No. 2000-38472. H of the -OH group possessed by phosphoric acid (OP(OH)₃) is substituted with a functional group having phenyl group to produce substituted acid as illustrated in the following chemical formulas (1) and (2). In the chemical formulas (1) and (2), R represents H, alkyl group having a number of carbon atom or atoms of 1 to 5, halogen group, or nitro group.

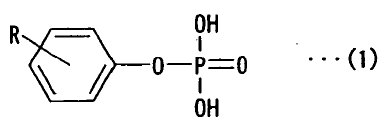

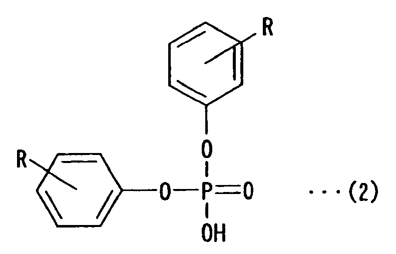

A polymer having imidazole ring is impregnated with the substituted acid to form a composite electrolyte (proton conductive solid polymer electrolyte).

The substituted acid has a low degree of water absorption as compared with phosphoric acid. Therefore, it is possible to avoid the increase in amount of the substituted acid, and it is possible to avoid the decrease in concentration.

However, there is a great demand to obtain an electrolyte which has an excellent ability to retain the components that contribute to the proton conductivity even when the operation is performed under the condition in which a large amount of liquid water is produced, for example, during the operation at low temperatures as described above.

The substance or material, which exhibits the proton conductivity, is exemplified by an acidic group-possessing organic compound bonded with a functional group (acidic group) which makes any bonded substance to be acidic. In order to lower the degree of elution of the acidic group-possessing organic compound into water, it is conceived that the acidic group-possessing organic compound molecules are polymerized with each other to produce an acidic group-possessing polymer.

In order for the proton conductivity to be substantially equivalent to one another even when the operation condition resides in low temperature or high temperature with low humidity, it is necessary to obtain a large mole number of the acidic group contained per gram of the acidic group-possessing polymer. Specifically, 9 x 10⁻⁴ mole of acidic group is contained in 1 g of the polymer of perfluorosulfonic acid, but an amount, which is several times the above, is required.

If, however, the mole number of the acidic group is increased, the acidic group-possessing polymer becomes water-soluble. Therefore, if the mole number of the acidic group is excessively increased, then the acidic group-possessing polymer is dissolved in liquid water produced, for example, in the low temperature operation, and the power generation characteristics of the fuel cell are deteriorated.

A method for suppressing the water solubility in the acidic group-possessing polymer is to blend the acidic group-possessing polymer and a basic polymer. In general, as reported by J. Kerres et al. in Solid State Ionics (1999), Vol. 125, pp. 243-249, such a blend polymer is obtained by blending the acidic group-possessing polymer and the basic polymer in an organic solvent.

See also DE 198 17 374 A1 and EP-A-1085590.

However, if the same operation is performed by using an acidic group-possessing polymer having a large mole number of acidic group contained per gram, in order for the proton conductivity to be substantially equivalent to one another even when the operation condition resides in low temperature or high temperature with low humidity as described above, the gelation is caused by the acid-base interaction in the organic solvent. Therefore, the acidic group-possessing polymer and the basic polymer are not blended sufficiently.

As described above it is difficult to prepare a material which contains the basic polymer and the acidic group-possessing polymer having a large mole number of the acidic group.

### SUMMARY OF THE INVENTION

A principal object of the present invention is to provide a proton conductive solid polymer electrolyte which has an excellent ability to retain an acidic group-possessing polymer that contributes to the proton conduction and which makes it possible to secure characteristics of an electrochemical cell thereby, and a method for producing the same.

According to one aspect of the present invention, there is provided a proton conductive solid polymer electrolyte comprising an acidic group-possessing polymer which has an acidic group and a basic polymer which is basic, wherein:
the acidic group-possessing polymer and the basic polymer are as hereinafter defined and are compatibilized with each other; and
the acidic group of the acidic group-possessing polymer exists in an amount of not less than 3 x 10⁻³ mole per gram of the acidic group-possessing polymer.

The term "compatibility" referred to in the present invention means a state in which the acidic group-possessing polymer and the basic polymer are mixed without causing any phase separation. The term "compatibilized polymer" means a polymer which is compatibilized or in compatibility.

The proton conductive solid polymer electrolyte, which contains the acidic group-possessing polymer having the large amount of the acidic group as described above, has an excellent proton conductivity. Further, when the acidic group-possessing polymer and the basic polymer are compatibilized with each other, the acidic group-possessing polymer is hardly eluted into the liquid. Accordingly, even when the electrolyte is used for a fuel cell in which liquid water is produced depending on the operation condition, the elution of the acidic group-possessing polymer into the liquid water is remarkably suppressed. Therefore, it is possible to avoid the deterioration of the power generation characteristics of the fuel cell.

The proton conductive solid polymer electrolyte exhibits excellent proton conductivity in a wide temperature range even in the case of a dried state. Accordingly, when the proton conductive solid polymer electrolyte is used for a fuel cell, it is unnecessary to provide any additional equipment such as a humidifier. Therefore, it is also possible to miniaturize the fuel cell system.

It is preferable that a repeating unit of the basic polymer has a mole number which is not less than 1/10 of a mole number of the acidic group of the acidic group-possessing polymer, for the following reason. That is, if the former mole number is less than 1/10 of the latter mole number, the water solubility of the acidic group-possessing polymer is not effectively suppressed.

According to another aspect of the present invention, there is provided a method for producing a proton conductive solid polymer electrolyte comprising an acidic group-possessing polymer which has an acidic group and a basic polymer which is basic, the method comprising:
mixing the acidic group-possessing polymer as hereinafter defined, a basic monomer as hereinafter defined and a compound for producing a metal ion in a solvent, or mixing a metal complex compound composed of a metal ion and the acidic group-possessing polymer and the basic monomer in a solvent;
polymerizing the basic monomer to produce the basic polymer and compatibilizing the basic polymer and the acidic group-possessing polymer to produce a compatibilized polymer; and
separating the compatibilized polymer from the solvent.

The absorbing force between the acidic group-possessing polymer and the basic monomer is decreased in the presence of the metal ion. That is, the basic monomer is not strongly adsorbed by the acidic group-possessing polymer. Therefore, it is possible to avoid the inhibition of the polymerization of the basic monomer.

In other words, the compatibilized polymer can be obtained easily and conveniently by polymerizing the basic monomer in the presence of the metal ion.

It is preferable that a mole number of the metal ion is not less than a mole number of the acidic group of the acidic group-possessing polymer, for the following reason. That is, if the mole number of the metal ion is less than the mole number of the acidic group, the basic monomer is not sufficiently polymerized in some cases.

It is preferable that the basic monomer, which is mixed in the mixing step, is added in such an amount that a mole number of the basic monomer is not less than 1/10 of a mole number of the acidic group of the acidic group-possessing polymer, in order that the mole number of the repeating unit of the compatibilized polymer (proton conductive solid polymer electrolyte) to be ultimately obtained is not less than 1/10 of the mole number of the acidic group.

Further, it is preferable that the method further comprises a step of heat-treating the compatibilized polymer, for the following reason. That is, on this condition, the elution of the acidic group-possessing polymer into the liquid is further suppressed. That is, the elution resistance is improved.

The above and other objects, features, and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 shows a schematic perspective view illustrating an entire proton conductive solid polymer electrolyte according to an embodiment of the present inventions;
FIG. 2 shows a flow chart illustrating a method for producing the proton conductive solid polymer electrolyte according to the embodiment of the present invention;
FIG. 3 shows a table illustrating the rate of retention of the acidic group-possessing polymer, obtained for each disk-shaped thin membrane prepared in Samples 1 to 6 and Comparative Samples 1, 2, and 4;
FIG. 4 shows a graph illustrating the relationship between the proton conductivity and the temperature of each disk-shaped thin membranes of Samples 1 to 4 and Comparative Sample 1; and
FIG. 5 shows a graph illustrating the relationship between the proton conductivity and the temperature of each of membrane test pieces of Sample 1 and Comparative Sample 7.

### DESCRIPTION OF THE PREFERRED EMBODIMENTS

A detailed explanation will be made below with reference to the accompanying drawings about the proton conductive solid polymer electrolyte according to the present invention and the method for producing the same as exemplified by preferred embodiments.

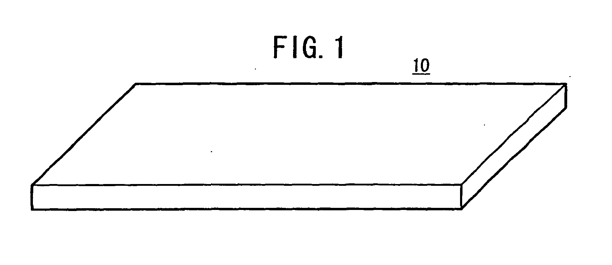

A proton conductive solid polymer electrolyte according to an embodiment of the present invention is shown in FIG. 1. The proton conductive solid polymer electrolyte 10 contains a compatibilized polymer in which an acidic group-possessing polymer having an acidic group and a basic polymer are compatibilized. The "acidic group" herein represents a "group for allowing a polymer to which the acidic group is bonded to exhibit the acidity". That is, the acidic group-possessing polymer exhibits acidity.

Those in which the mole number of the acidic group contained per gram of the acidic group-possessing polymer is not less than 3 x 10⁻³ mole, are selected for the acidic group-possessing polymer. When the mole number of the acidic group is prescribed as described above, the proton conductivity can be made substantially equivalent to one another even when the fuel cell is operated under any one of the condition in which the temperature is low and the humidity is high or the temperature is high and the humidity is low, for example, when the proton conductive solid polymer electrolyte 10 is used as an electrolyte of the fuel cell. More preferably, the mole number of the acidic group is not less than 4 x 10⁻³ mole.

The repeating unit of the acidic group-possessing polymer is

represented by the following chemical formulas (3) and (4):

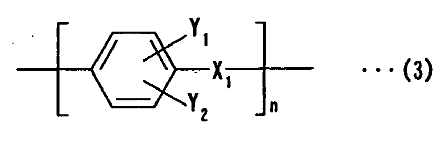

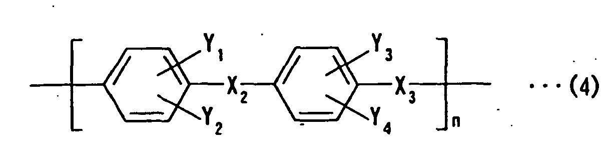

In the chemical formulas (3) and (4), X1, X2, X3 are any one of S, SO₂, O, CO, and CH₂. X2 and X3 may be the same, or they may be different. On the other hand, at least one of Y1, Y2, Y3, Y4 is any one of SO₃R, OPO(OH)₂. and PO(OH)₂. Y1 and Y2, and Y3 and Y4 may be bonded at any position provided that the position does not participate in the principal chain bond of the polymer.

In the embodiment of the present invention, those which are compatible with the acidic group-possessing polymer described above are selected for the basic polymer, specifically, polyaniline, and derivatives. That is, the repeating unit of the basic polymer is aniline, or any one of derivatives represented by the following chemical formula (9):

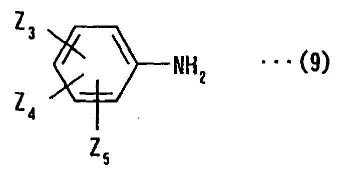

In the chemical formula (9), Z3 to Z5 are functional groups which are independently selected from H, CH₃, C₂H₅, F, Cl, Br, I, and Ph.

In the compatibilized polymer, it is preferable that the mole number of the repeating unit is not less than 1/10 of the mole number of the acidic group. That is, if the mole number of the acidic group is 1 mole, the mole number of the repeating unit should not be less than 1/10 mole. If the mole number of the repeating unit is less than 1/10 of the mole number of the acidic group, the water solubility of the acidic group-possessing polymer is not effectively suppressed.

The proton conductive solid polymer electrolyte 10 may contain a polymer having the proton conductivity such as sulfonated polyketone having sulfonic acid group, in addition to the compatibilized polymer composed of the components as described above.

When the proton conductive solid polymer electrolyte 10 constructed as described above is used as an electrolyte of the fuel cell, then a fuel gas containing hydrogen is supplied to the anode of the fuel cell, and an oxygen-containing gas containing oxygen is supplied to the cathode. During this process, hydrogen is ionized into protons and electrons on the anode.

The electrons are taken out of the fuel cell system to be used as DC electric energy for energizing an external load, and then the electrons return to the cathode. On the other hand, the protons arrive at one end surface of the proton conductive solid polymer electrolyte 10. Any one of the basic polymers described above has proton conductivity, and the acidic group-possessing polymer assists the movement of the protons. Therefore, the protons are easily moved to the other end surface of the proton conductive solid polymer electrolyte 10, and the protons return to the cathode. The protons, electrons, and the oxygen contained in the oxygen-containing gas supplied to the cathode react to produce H₂O thereby.

When the fuel cell is operated at a low temperature, for example, during the start-up operation of the fuel cell, H₂O is produced as liquid water to make contact with the proton conductive solid polymer electrolyte 10. However, the acidic group-possessing polymer and the basic polymer are compatibilized with each other in the proton conductive solid polymer electrolyte 10. Accordingly, the elution resistance of the acidic group-possessing polymer is remarkably improved. Therefore, even when the liquid water makes contact with the proton conductive solid polymer electrolyte 10, the elution of the acidic group-possessing polymer into water is remarkably prevented.

That is, when the proton conductive solid polymer electrolyte 10 according to the embodiment of the present invention is used, the elution of the acidic group-possessing polymer into the water is suppressed even when contact with liquid water. Therefore, it is possible to maintain proton conductivity.

Further, even when the fuel cell reaches the operation temperature, and H₂O is produced as steam, then it is also possible to avoid the reduction of proton conductivity, because the acidic group of the acidic group-possessing polymer exists in an amount not less than the predetermined mole number. In other words, the proton conductivity obtained when the fuel cell is operated in a high temperature with low humidity, can be made to be substantially equivalent to the proton conductivity obtained when the fuel cell is operated under a condition in which liquid water is produced.

Further, the proton conductive solid polymer electrolyte 10 exhibits excellent proton conductivity in a wide temperature range even in a dried state as described later on. Accordingly, when the proton conductive solid polymer electrolyte 10 is used for the fuel cell, it is unnecessary to provide any additional equipment such as a humidifier. Therefore, it is also possible to miniaturize the fuel cell system.

It is a matter of course that the proton conductive solid polymer electrolyte 10 can be used as a solid electrolyte even in electrochemical cells other than the fuel cell, including, for example, a hydrogen and oxygen generator for generating hydrogen and oxygen by electrolyzing water.

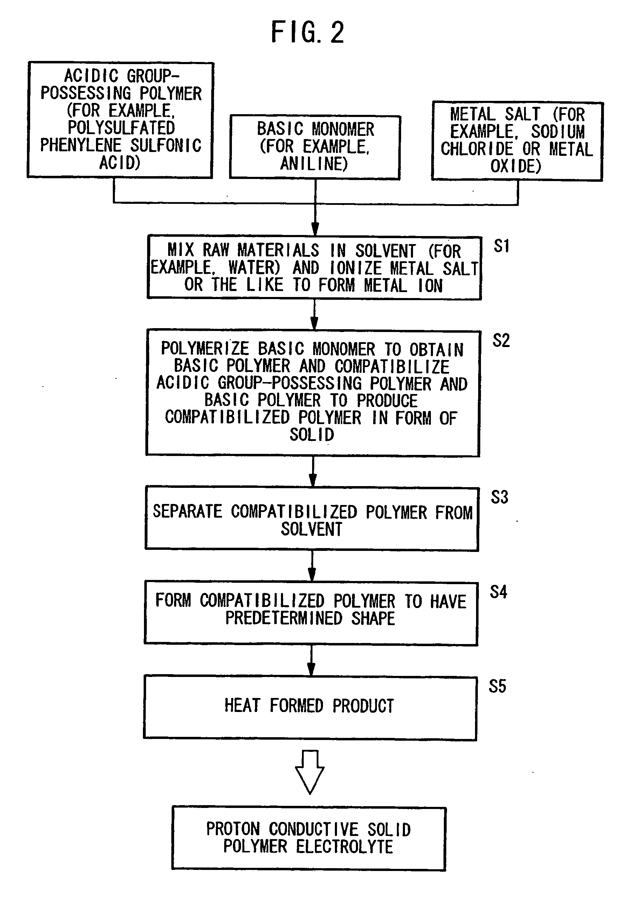

Next, a method for producing the proton conductive solid polymer electrolyte 10 will be explained with reference to FIG. 2 as a flow chart. This production method comprises a first step S1 of dissolving raw materials in a solvent, a second step S2 of polymerizing a basic monomer contained in the raw materials to obtain a compatibilized polymer in a solid form, a third step S3 of separating the compatibilized polymer from the solvent, a fourth step S4 of forming the separated compatibilized polymer to have a predetermined shape, and a fifth step S5 of heat-treating the formed product.

At first, in the first step S1, the acidic group-possessing polymer as represented by the foregoing chemical formulas (3) and (4), the basic monomer as the raw material for the basic polymer, and the metal ion are mixed in water as the solvent. In this procedure, for example, aniline. can be selected as the basic polymer. Alternatively, a derivative may be used.

In order for the mole number of the repeating unit of the compatibilized polymer ultimately obtained to be not less than 1/10 mole with respect to 1 mole of the acidic group, the mole number of the basic monomer is preferably not less than 1/10 mole with respect to 1 mole of the acidic group.

The metal ion reduces the acid-base interaction between the acidic group-possessing polymer and the basic monomer in water. That is, when the metal ion is present, the absorbing force between the acidic group-possessing polymer and the basic monomer is remarkably decreased.

The metal ion is not specifically limited if it effects the above action. However, it is preferable to use an alkali metal ion such as Li⁺. Na⁺, and K⁺ or an alkaline earth metal ion such as Ca²⁺.

The mole number of the metal ion is preferably not less than the mole number of the acidic group of the acidic group-possessing polymer. If the mole number of the metal ion is less than the mole number of the acidic group, it is not easy to advance the polymerization of the basic monomer. In other words, the basic monomer is not sufficiently polymerized in some cases.

The metal ion is supplied by introducing a metal salt or a metal hydroxide into water and ionizing the salt or the hydroxide. The metal salt may be exemplified by halogenides of the alkali metal or the alkaline earth metal as described above. On the other hand, the metal hydroxide may be exemplified by hydroxides thereof.

Subsequently, in the second step S2, the basic monomer is polymerized. Specifically, a polymerizing agent for polymerizing the basic monomer is added to the solution in which the substances as described above are dissolved. Ammonium peroxidisulfate, ferric chloride (III), ferric hydroxide (III), hydrogen peroxide, peroxy acid, or Lewis acid may be selected as the polymerizing agent.

The basic monomer is polymerized under the action of the polymerizing agent. As a result, the compatibilized polymer, which is composed of the basic polymer and the acidic group-possessing polymer, is produced in water. The compatibilized polymer is deposited as a granular solid.

Subsequently, in the third step S3, the water is separated from the granular solid of the compatibilized polymer by means of, for example, filtration, and then the granular solid is dried. As a result, a dry powdery solid of the compatibilized polymer is obtained.

Subsequently, in the fourth step S4, a membrane-shaped product is manufactured. That is, the dry powdery solid is pulverized to obtain fine powder, and the fine powder is compressed to have a shape of membrane. Alternatively, the dry powdery solid may be melted to obtain a molten liquid, and the molten liquid may be injection-molded to have a shape of membrane. Further alternatively, the dry powdery solid may be dissolved in a solvent, and the solution obtained may be cast on a smooth surface such as a glass plate, followed by removal of the solvent by means of, for example, volatilization to form a membrane.

In any method, a polymer having proton conductivity such as sulfonated polyketone having sulfonic acid group may be contained. In this case, the polymer may be pulverized, melted, or dissolved together with the dry powdery solid.

The membrane composed of the compatibilized polymer, i.e., the membrane of the proton conductive solid polymer electrolyte 10 is formed by processing the method as described above.

Further, in the fifth step S5, heat treatment is applied to the membrane. The heat treatment is performed in a vacuum atmosphere, or an inert atmosphere such as argon gas, at a temperature at which no chemical changes in the acidic group or the like of the acidic group-possessing polymer may occur.

The heat treatment further improves the elution resistance of the acidic group-possessing polymer contained in the proton conductive solid polymer electrolyte 10 (compatibilized polymer). The proton conductivity is not inhibited by the heat treatment.

Thus, the membrane, which is composed of the proton conductive solid polymer electrolyte 10, is obtained as described above.

In the embodiment described above, the metal salt or the metal hydroxide to provide the metal ion, the acidic group-possessing polymer, and the basic monomer are individually dissolved in water. However, a metal complex compound, which is composed of the metal ion and the acidic group-possessing polymer, may be previously prepared, and, alternatively, the metal complex compound and the basic monomer may be dissolved in a solvent such as water.

### EXAMPLES

### 1. Preparation of Membrane-shaped Compatibilized Polymer

The processes, which followed the procedures represented by the following chemical reaction formulas, were performed exactly in accordance with a certain sequence, and thus polysulfated phenylene sulfonic acid as the acidic group-possessing polymer was prepared.

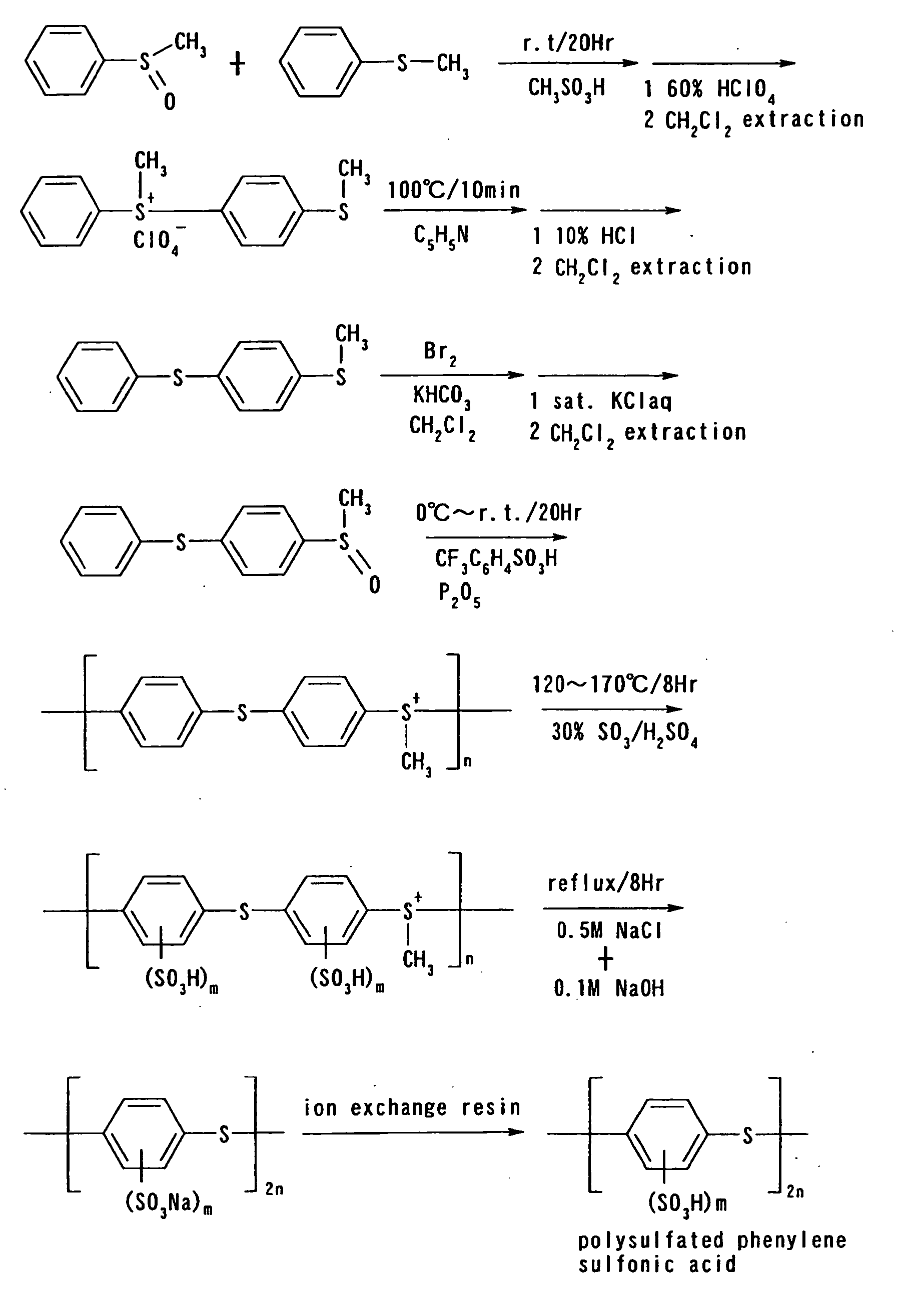

At first, 15 g of methyl phenyl sulfoxide was dissolved in 13.3 g of thianisole in an argon atmosphere. 214 ml of methanesulfonic acid was dropped to an obtained solution while cooling the solution to perform the reaction for 20 hours at room temperature.

This solution was mixed with 214 ml of 60 % perchloric acid, and then agitated for 1 hour. When 100 ml of deionized water and 100 ml of methylene chloride were added thereto, the mixture was separated into an aqueous layer and an organic layer. Of these layers, the aqueous layer was extracted with methylene chloride, and then the extracted matter was added to the organic layer. Methylene chloride was removed under a reduced pressure to obtain a reaction product.

Subsequently, the obtained reaction product was dissolved in 175 ml of pyridine, agitated for 30 minutes and then heated to 100° C. After being left to effect the cooling, the solution was mixed with 1000 ml of hydrochloric acid having a concentration of 10 %. The mixture solution was extracted with methylene chloride to obtain a reaction product to which 87 ml of an aqueous solution of potassium hydrogencarbonate having a concentration of 10 % and 100 ml of methylene chloride were added. A solution, which was obtained by dissolving 13.8 g of bromine in 100 ml of methylene chloride, was dropped at room temperature to the reaction product after the addition.

A saturated aqueous solution of 200 ml of potassium chloride was added to the reaction product after the addition, extracted with methylene chloride and then dried with sodium sulfate. The dried matter was further exposed to a vacuum atmosphere to volatilize and remove the solvent thereby, and thus an acidic group-possessing monomer was obtained.

20 g of the monomer was cooled with ice in an argon atmosphere, to which 100 g of trifluoromethanesulfonic acid was added in this state. Further, 10 g of diphosphorus pentoxide was added, agitated for 20 hours at room temperature to polymerize the monomer.

The obtained polymer was washed with deionized water, and then dried at 80° C in vacuum. Subsequently, 500 g of fuming sulfuric acid having a concentration of 30 % was added to the polymer in an argon atmosphere, and then reacted for 8 hours at 120° to 170° C to sulfonate the polymer.

After being left to effect the cooling, the sulfonated polymer was poured into 2000 ml of ethanol together with fuming sulfuric acid to produce a precipitate. The precipitate was washed and neutralized, and then the precipitate was dissolved in 1000 ml of an aqueous mixture solution containing sodium chloride at a concentration of 0.5 M (mol/1) and sodium hydroxide at a concentration of 0.1 M, and then refluxed for 8 hours.

After being left to effect the cooling, a dialysis treatment was performed for 48 hours, and the solution was allowed to pass through a column filled with an ion exchange resin to substitute sodium ion with proton. Further, the aqueous solution was dehydrated under a reduced pressure to obtain a fine powder of polysulfated phenylene sulfonic acid as the acidic group-possessing polymer. The degree of sulfonation of polysulfated phenylene sulfonic acid was 1.74 per phenyl group.

1.32 g of polysulfated phenylene sulfonic acid obtained as described above and sodium chloride were dissolved in 20 ml of deionized water at 60° C. The amount of sodium chloride was 0.55 g so that sodium ion was present in an amount of 1 mole with respect to 1 mole of sulfonic acid group of polysulfated phenylene sulfonic acid.

After cooling the solution to 0° C, aniline was dissolved in the solution. In this procedure, the amount of aniline was to give 0.33 mole with respect to 1 mole of sulfonic acid group of polysulfated phenylene sulfonic acid. Specifically, the amount of aniline was 0.28 g.

The solution was agitated until the solution was turbid. After that, a solution, which was obtained by dissolving 0.876 g of ammonium peroxidisulfate as a polymerizing agent for aniline in 10 ml of deionized water, was dropped to the solution over 2 hours. Aniline was subjected to oxidation polymerization by being left for 8 hours while maintaining the mixed solution at 7° C, and then agitated for 8 hours at room temperature.

Subsequently, a solid, which was deposited in a granular form, was separated from the mixed solution by means of the filtration. The deposited solid was washed with water, and then dried in vacuum at 80° C to obtain a powdery compatibilized polymer containing polysulfated phenylene sulfonic acid and polyaniline. This product was designated as Sample 1.

The powdery compatibilized polymer of Sample 1 was compressively formed with a hand press machine at 137.3 kPa to obtain a disk-shaped thin membrane having a diameter of 6 mm and a thickness of 0.5 mm.

2.05 g of polysulfated phenylene sulfonic acid prepared under the same condition as that in Sample 1 and sodium chloride were dissolved in 20 ml of deionized water at 60° C. Also in this procedure, the amount of sodium chloride was 0.84 g so that sodium ion was 1 mole with respect to 1 mole of sulfonic acid group of polysulfated phenylene sulfonic acid.

The solution was cooled to 0° C, and then aniline was dissolved in the solution. In this procedure, the amount of aniline was 0.26 g so that aniline was 0.2 mole with respect to 1 mole of sulfonic acid group of polysulfated phenylene sulfonic acid.

The solution was agitated until the solution was turbid. After that, a solution, which was obtained by dissolving 0.813 g of ammonium peroxidisulfate in 10 ml of deionized water, was dropped to the solution over 2 hours.

The following operation was performed in accordance with the operation performed in Sample 1 to obtain a powdery compatibilized polymer containing polysulfated phenylene sulfonic acid and polyaniline. This product was designated as Sample 2.

Further, a disk-shaped thin membrane having the same size as that of Sample 1 was obtained in the same manner as in Sample 1.

Aniline was dissolved in the solution which was cooled to 0° C and which was obtained in the same manner as in Sample 2 except that the amount of polysulfated phenylene sulfonic acid prepared under the same condition as that in Sample 1 was 1.00 g and the amount of sodium chloride was 0.41 g so that sodium ion was 1 mole with respect to 1 mole of sulfonic acid group of the polysulfated phenylene sulfonic acid. In this procedure, the amount of aniline was 0.33 g or 0.65 g so that aniline was 0.5 mole or 1 mole with respect to 1 mole of sulfonic acid group of polysulfated phenylene sulfonic acid.

The following operation was performed in accordance with the operation performed in Sample 1 to obtain powdery compatibilized polymers each containing polysulfated phenylene sulfonic acid and polyaniline. These products were designated as Sample 3 and Sample 4, respectively.

Further, disk-shaped thin membranes having the same size as that of Sample 1 were obtained in the same manner as in Sample 1.

Disk-shaped thin membranes obtained in accordance with the same method as that in Samples 1 and 2 respectively were heated for 1 hour at 250° C in a vacuum atmosphere. These products were designated as Samples 5 and 6 respectively.

A disk-shaped thin membrane composed of only polysulfated phenylene sulfonic acid was manufactured in accordance with Sample 1. This product was designated as Comparative Sample 1.

Polysulfated phenylene sulfonic acid was prepared in accordance with Sample 1. On the other hand, 0.28 g of aniline was dissolved in 20 ml of deionized water. Further, a solution, which was obtained by dissolving 0.876 g of ammonium peroxidisulfate in 10 ml of deionized water, was dropped to the solution over 2 hours. Aniline was subjected to oxidation polymerization by being left for 8 hours while maintaining the mixed solution at 7° C, and then agitated for 8 hours at room temperature.

Subsequently, a solid, which was deposited in a granular form, was separated from the mixed solution by means of the filtration. The deposited solid was washed with water, and then dried in vacuum at 80° C to obtain polyaniline.

Polysulfated phenylene sulfonic acid and polyaniline obtained as described above were added to dimethylsulfoxide (DMSO) such that the repeating unit in polyaniline was 0.33 mole with respect to 1 mole of sulfonic acid group of polysulfated phenylene sulfonic acid. However, in this case, polyaniline was not dissolved sufficiently, and the solution gelated.

After that, a deposited powder was separated from the solvent in accordance with Sample 1, and then dried. This product was designated as Comparative Sample 2. A disk-shaped thin membrane was manufactured from the powder of Comparative Sample 2 in the same manner as in Sample 1.

The operation was performed in the same manner as the operation performed in Sample 1 except that aniline was added without adding sodium chloride to the aqueous solution in which polysulfated phenylene sulfonic acid was dissolved. However, in this case, the polymerization of aniline was not advanced sufficiently, and it was unsuccessful to obtain any compatibilized polymer as a powdery solid (Comparative Sample 3).

The operation was performed in the same manner as the operation performed in Sample 1 except that hydrochloric acid was added to the aqueous solution in which polysulfated phenylene sulfonic acid was dissolved so that the mole number of proton was 1 mole with respect to 1 mole of sulfonic acid group of polysulfated phenylene sulfonic acid. However, in this case, aniline was not adsorbed to polysulfated phenylene sulfonic acid, and hence the compatibilization was not advanced (Comparative Sample 4).

The operation was performed in the same manner as the operation performed in Sample 1 except that sodium chloride was added to the aqueous solution in which polysulfated phenylene sulfonic acid was dissolved so that the mole number of sodium ion was 0.5 mole or 0.7 mole with respect to 1 mole of sulfonic acid group of polysulfated phenylene sulfonic acid. In Comparative Samples 5 and 6 described in this section, the polymerization of aniline was somewhat insufficient, and it was unsuccessful to obtain a compatibilized polymer in an amount of such a degree that any disk-shaped thin membrane was successfully manufactured.

### 2. Evaluation of Elution Resistance of Acidic Group-possessing Polymer

The respective disk-shaped thin membranes of Samples 1 to 6 and Comparative Samples 1, 2, and 4 were immersed in deionized water, and then left for 24 hours at room temperature. After that, the titration was performed with an aqueous sodium hydroxide solution to determine the quantity of the mole number of acidic group eluted into the deionized water thereby. The change in amount of the acidic group before and after the immersion was calculated to determine the ratio (retention rate) of the acidic group-possessing polymer retained by the disk-shaped thin membrane assuming that the ratio of the acidic group-possessing polymer included in the disk-shaped thin membrane before the immersion was 100.

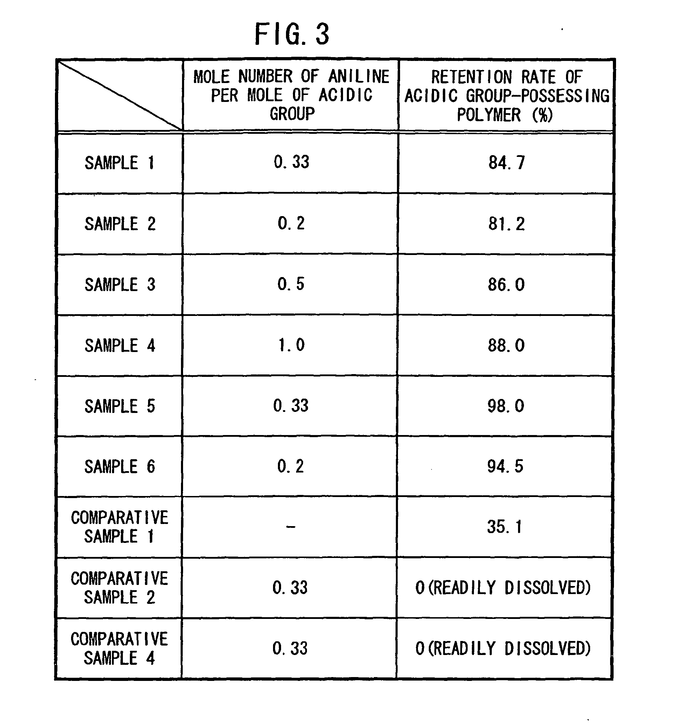

Results are shown in FIG. 3 in combination. According to FIG. 3, it is clear that the retention rate is remarkably high in the disk-shaped thin membranes of Samples 1 to 6 as compared with the disk-shaped thin membrane of Comparative Sample 1. It is also clearly understood that the elution of the acidic group-possessing polymer cannot be suppressed in Comparative Sample 2 in which the acidic group-possessing polymer and the basic polymer were mixed and in Comparative Sample 4 in which the basic monomer was polymerized in the presence of proton.

### 3. Evaluation of Proton Conductivity

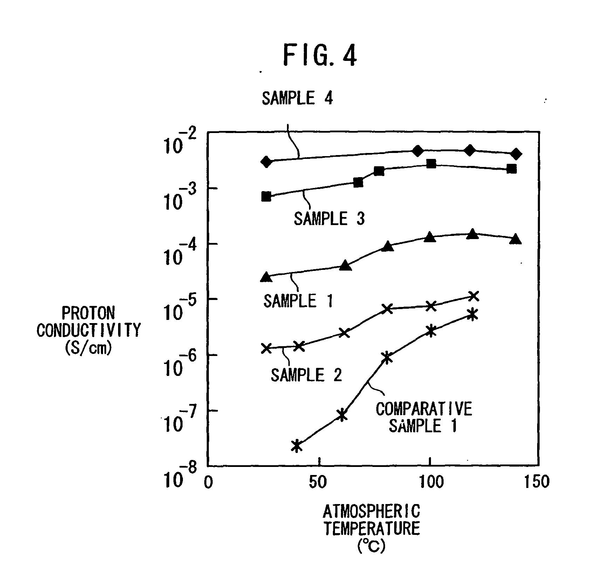

At first, the respective disk-shaped thin membranes of Samples 1 to 4 and Comparative Sample 1 were dried for 12 hours at 80° C in a vacuum atmosphere, and then the proton conductivity was measured for the respective disk-shaped thin membranes as a function of the temperature in accordance with the four-terminal high frequency impedance method. Results are shown in FIG. 4 in combination. According to FIG. 4, it is understood that the proton conductivities of the disk-shaped thin membranes of Samples 1 to 4 are higher than that of the disk-shaped thin membrane of Comparative Sample 1 in a wide temperature range.

Separately from the above, the powdery compatibilized polymer of Sample 1 was dissolved in a solution obtained by dissolving sulfonated polyether ketone having 0.6 mole of sulfonic group in one repeating unit in 2-methylpyrrolidinone so that the concentration was 10 %. In this procedure, the ratio between the powdery compatibilized polymer and sulfonated polyether ketone was 1:3 in weight ratio.

The mixed solution was cast on a clean glass plate, and then the solvent was evaporated at 80° C in the atmospheric air to prepare a membrane-shaped test piece which contained the powdery compatibilized polymer and sulfonated polyether ketone and which had a size of: 50 µm (thickness) x 50 mm (length) x 5 mm (width). This product is hereinafter referred to as "membrane-shaped test piece of Sample 1".

For the purpose of comparison, the solution, which was obtained by dissolving sulfonated polyether ketone having 0.6 mole of sulfonic group in one repeating unit in 2-methylpyrrolidinone to have the concentration was 10 %, was cast on a clean glass plate, and then the solvent was evaporated at 80° C in the atmospheric air to prepare a membrane-shaped test piece which was composed of sulfonated polyether ketone. This product is hereinafter referred to as "membrane-shaped test piece of Comparative Sample 7". Of course, the membrane-shaped test piece of Comparative Sample 7 had the same size as that of the membrane-shaped test piece of Sample 1.

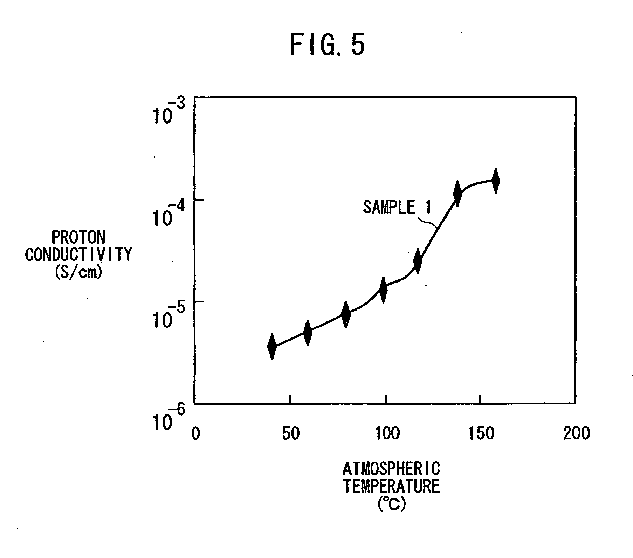

The respective membrane-shaped test pieces of Sample 1 and Comparative Sample 7 were dried for 12 hours at 80° C in a vacuum atmosphere, and the proton conductivity was measured as a function of the temperature for the respective membrane-shaped test pieces in accordance with the two-terminal high frequency impedance method. Results are shown in FIG. 5. The proton conductivity of the membrane-shaped test piece of Comparative Sample 7 does not appear in FIG. 5, because the proton conductivity was far under the scale shown in FIG. 5.

According to FIG. 5, it is clearly understood that the membrane-shaped test piece of Sample 1 exhibits the proton conductivity over a wide range ranging from a low temperature region of about 50° C to a high temperature region of about 160° C, although the test piece is in a dried state.

According to the results described above, it is clear that the compatibilized polymer of Sample 1 is excellent in ability to retain the acidic group-possessing polymer (elution resistance), and the compatibilized polymer exhibits the proton conductivity over the wide temperature range even when the compatibilized polymer is in the dried state.

As described above, the elution of the acidic group-possessing polymer is remarkably suppressed, because the acidic group-possessing polymer and the basic polymer are compatibilized with each other. Accordingly, for example, when the proton conductive solid polymer electrolyte is used as an electrolyte of the fuel cell, the proton conductive solid polymer electrolyte is prevented from the decrease in proton conductivity, even when the fuel cell is operated under a condition in which any liquid water is produced. That is, it is possible to avoid the deterioration of power generation characteristics of the fuel cell.

## Claims

1. A proton conductive solid polymer electrolyte (10) comprising a basic polymer and an acidic group-possessing polymer which has an acidic group, wherein:
said basic polymer is polyaniline or a derivative thereof, in which the repeat unit is represented by the following chemical formula (9): 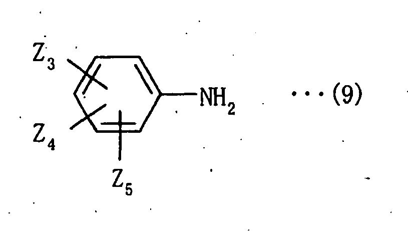 wherein Z3 to Z5 are functional groups which are independently selected from H, CH₃, C₂H₅, F, Cl, Br, I and Ph
said acidic group-possessing polymer is represented by any one of the following chemical formulae (3) and (4): 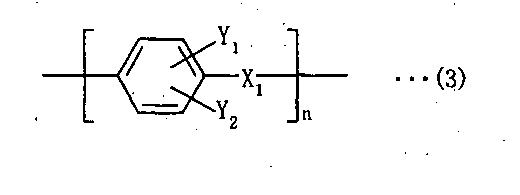 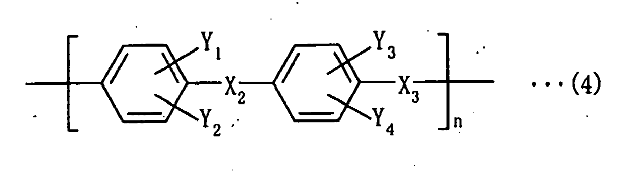 wherein X1, X2, and X3 are any one of S, SO₂, O, CO, and CH₂, X2 and X3 may be identical with each other or different from each other, and at least one of Y1, Y2, Y3, and Y4 is any one of SO₃H, OPO(OH)₂, and PO(OH)₂
said acidic group-possessing polymer and said basic polymer are compatibilized with each other; and
said acidic group of said acidic group-possessing polymer exists in an amount of not less than 3 x 10⁻³ mole per gram of said acidic group-possessing polymer.

2. The proton conductive solid polymer electrolyte (10) according to claim 1, wherein a repeating unit of said basic polymer has a number of moles which is not less than 1/10 of the number of moles of said acidic group of said acidic group-possessing polymer.

3. A method for producing a proton conductive solid polymer electrolyte (10) comprising a basic polymer and an acidic group-possessing polymer which has an acidic group, wherein said basic polymer is polyaniline or a derivative thereof, in which the repeat unit is represented by the following chemical formula (9): 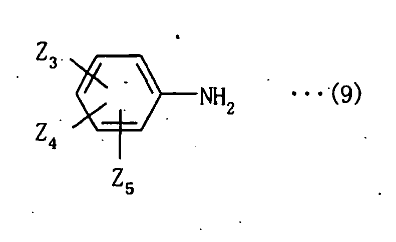 wherein Z3 to Z5 are functional groups which are independently selected from H, CH₃, C₂H₅, F, Cl, Br, I and Ph
said acidic group-possessing polymer is represented by any one of the following chemical formulae (3) and (4): 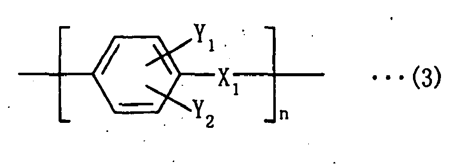 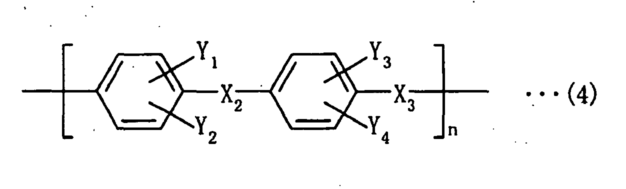 wherein X1, X2, and X3 are any one of S, SO₂, O, CO, and CH₂, X2 and X3 may be identical with each other or different from each other, and at least one of Y1, Y2, Y3, and Y4 is any one of SO₃H, OPO(OH)₂, and PO(OH)₂,
and said acidic group of said acidic group-possessing polymer exists in an amount of not less than 3 x 10⁻³ mole per gram of said acidic group-possessing polymer,
said method comprising:
mixing said acidic group-possessing polymer, a basic monomer, and a compound for producing a metal ion in a solvent, or mixing a metal complex compound composed of a metal ion and said acidic group-possessing polymer and a basic monomer in a solvent;
polymerizing said basic monomer to produce said basic polymer and compatibilizing said basic polymer and said acidic group-possessing polymer to produce a compatibilized polymer; and
separating said compatibilized polymer from said solvent.

4. The method for producing said proton conductive solid polymer electrolyte (10) according to claim 3, wherein the number of moles of said metal ion is not less than the number of moles of said acidic group of said acidic group-possessing polymer.

5. The method for producing said proton conductive solid polymer electrolyte (10) according to claim 3 or 4, wherein said basic monomer mixed in said mixing step is added in such an amount that number of moles of said basic monomer is not less than 1/10 of the the number of moles of said acidic group of said acidic group-possessing polymer.

6. The method for producing said proton conductive solid polymer electrolyte (10) according to any one of claims 3 to 5, further comprising a step of heat-treating said compatibilized polymer.

7. The method for producing said proton conductive solid polymer electrolyte (10) according to any one of claims 3 to 6, wherein an alkali metal ion or an alkaline earth metal ion is used as said metal ion.

8. The method for producing said proton conductive solid polymer electrolyte (10) according to claim 7, wherein Li⁺, Na⁺, and/or K⁺ is used as said alkali metal ion.

9. The method for producing said proton conductive solid polymer electrolyte (10) according to claim 7, wherein Ca²⁺ is used as said alkaline earth metal ion.

## Patentansprüche

1. Protonenleitender fester Polymerelektrolyt (10), umfassend ein basisches Polymer und ein saure Gruppen enthaltendes Polymer, mit einer sauren Gruppe, worin:
das basische Polymer Polyanilin oder ein Derivat davon ist, worin die Wiederholungseinheit durch die folgende chemische Formel (9) repräsentiert wird: 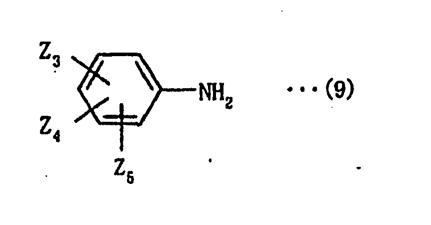
worin Z₃ bis Z₅ funktionale Gruppen sind, die unabhängig ausgewählt sind aus H, CH₃, C₂H₅, F, Cl, Br, I und Ph,
worin das saure Gruppen enthaltende Polymer durch eine der folgenden chemischen Formeln (3) und (4) repräsentiert wird: 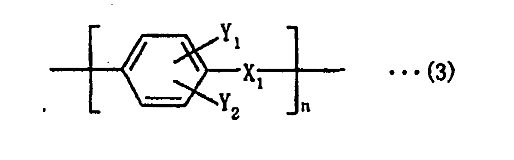 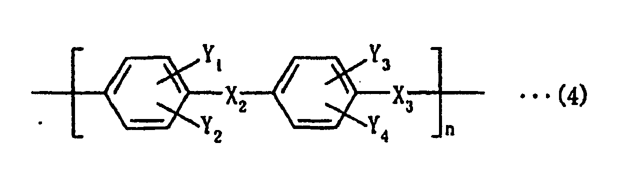
worin X₁, X₂ und X₃ eines aus S, SO₂, O, CO und CH₂ sind, X₂ und X₃ miteinander identisch oder voneinander verschieden sind, und mindestens eines von Y₁, Y₂, Y₃ und Y₄ ein beliebiges aus SO₃H, OPO(OH)₂ und PO(OH)₂ ist,
worin das saure Gruppen enthaltende Polymer und das basische Polymer miteinander kompatibilisiert sind; und
die saure Gruppe des saure Gruppen enthaltenden Polymers in einer Menge von nicht weniger als 3x10⁻³ Mol pro Gramm des saure Gruppen enthaltenden Polymers vorliegt.

2. Protonenleitender fester Polymerelektrolyt (10) nach Anspruch 1, worin die Wiederholungseinheit des basischen Polymers eine Anzahl von Molen aufweist, die nicht kleiner als 1/10 der Anzahl von Molen der sauren Gruppen des saure Gruppen enthaltenden Polymers aufweist.

3. Verfahren zum Herstellen eines protonenleitenden festen Polymerelektrolyten (10), umfassend ein basisches Polymer und ein saure Gruppen enthaltendes Polymer mit einer sauren Gruppe, worin:
das basische Polymer Polyanilin oder ein Derivat davon ist, worin die Wiederholungseinheit durch die folgende chemische Formel (9) repräsentiert wird: 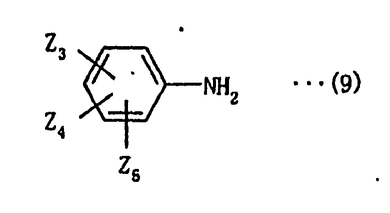
worin Z₃ bis Z₅ funktionale Gruppen sind, die unabhängig ausgewählt sind aus H, CH₃, C₂H₅, F, Cl, Br, I und Ph,
worin das saure Gruppen enthaltende Polymer durch eine der folgenden chemischen Formeln (3) und (4) repräsentiert wird: 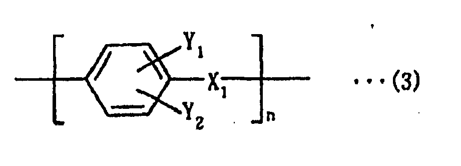 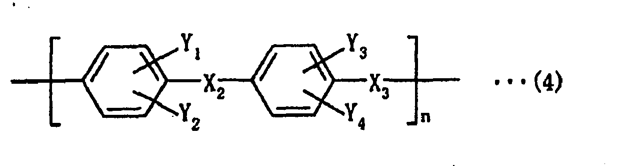
worin X₁, X₂ und X₃ eines aus S, SO₂, O, CO und CH₂ sind, X2 und X3 miteinander identisch oder voneinander verschieden sind und mindestens eines von Y₁, Y₂, Y₃ und Y₄ ein beliebiges aus SO₃H, OPO(OH)₂ und PO(OH)₂ ist,
und worin die saure Gruppe des saure Gruppen enthaltenden Polymers in einer Menge von nicht weniger als 3x10⁻³ Mol pro Gramm des saure Gruppen enthaltenden Polymers vorliegt,
worin das Verfahren umfasst:
Mischen des saure Gruppen enthaltenden Polymers, eines basischen Monomers und einer Verbindung zum Herstellen eines Metallions in einem Lösungsmittel oder Mischen einer Metallkomplexverbindung, bestehend aus einem Metallion und dem saure Gruppen enthaltenden Polymer und einem basischen Monomer in einem Lösungsmittel;
Polymerisieren des basischen Monomers zum Herstellen des basischen Polymers und Kompatibilisieren des basischen Polymers und des saure Gruppen enthaltenden Polymers zum Herstellen eines kompatibilisierten Polymers; und
Abtrennen des kompatibilisierten Polymers von dem Lösungsmittel.

4. Verfahren zum Herstellen des protonenleitenden festen Polymerelektrolyten (10) nach Anspruch 3, worin die Anzahl von Molen des Metallions nicht kleiner als die Anzahl von Molen der sauren Gruppen des saure Gruppen enthaltenden Polymers ist.

5. Verfahren zum Herstellen des protonenleitenden festen Polymerelektrolyten (10) nach Anspruch 3 oder 4, worin das basische Monomer, das in dem Mischschritt eingemischt wird, in einer solchen Menge zugegeben wird, dass die Anzahl von Molen des basischen Monomers nicht kleiner als 1/10 der Anzahl von Molen der sauren Gruppen des saure Gruppen enthaltenden Polymers ist.

6. Verfahren zum Herstellen des protonenleitenden festen Polymerelektrolyten (10) nach einem der Ansprüche 3 bis 5, weiterhin umfassend einen Schritt des Wärmebehandelns des kompatibilisierten Polymers.

7. Verfahren zum Herstellen des protonenleitenden festen Polymerelektrolyten (10) nach einem der Ansprüche 3 bis 6, worin ein Alkalimetallion oder ein Erdalkalimetallion als das Metallion verwendet wird.

8. Verfahren zum Herstellen des protonenleitenden festen Polymerelektrolyten (10) nach Anspruch 7, worin Li⁺, Na⁺ und/oder K⁺ als das Alkalimetallion verwendet wird.

9. Verfahren zum Herstellen des protonenleitenden festen Polymerelektrolyten (10) nach Anspruch 7, worin Ca²⁺ als das Erdalkalimetallion verwendet wird.

## Revendications

1. Electrolyte polymère solide conducteur protonique (10) comprenant un polymère basique et un polymère possédant un groupe acide, qui a un groupe acide, dans lequel :
ledit polymère basique est une polyaniline ou un dérivé de celle-ci, dans lequel le motif répétitif est représenté par la formule chimique (9) suivante : 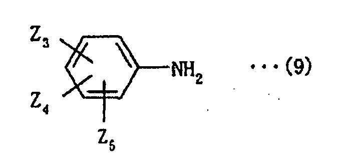 dans laquelle Z3 à Z5 sont des groupes fonctionnels qui sont indépendamment choisis parmi H, CH₃, C₂H₅, F, Cl, Br, I et Ph
ledit polymère possédant un groupe acide est représenté par l'une quelconque des formules chimiques (3) et (4) suivantes: 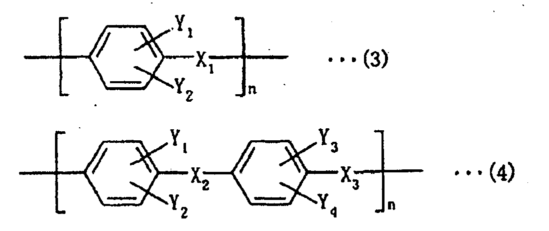 dans lesquelles X1, X2 et X3 sont l'un quelconque parmi S, SO₂, O, CO et CH₂, X2 et X3 peuvent être identiques l'un à l'autre ou différents l'un de l'autre, et au moins l'un parmi Y1, Y2, Y3 et Y4 est l'un quelconque parmi SO₃H, OPO(OH)₂ et PO(OH)₂
ledit polymère possédant un groupe acide et ledit polymère basique sont rendus compatibles l'un avec l'autre ; et
ledit groupe acide dudit polymère possédant un groupe acide existe en une quantité non inférieure à 3 x 10⁻³ mole par gramme dudit polymère possédant un groupe acide.

2. Electrolyte polymère solide conducteur protonique (10) selon la revendication 1, dans lequel un motif répétitif dudit polymère basique a un nombre de moles qui n'est pas inférieur à 1/10 du nombre de moles dudit groupe acide dudit polymère possédant un groupe acide.

3. Procédé pour préparer un électrolyte polymère solide conducteur protonique (10) comprenant un polymère basique et un polymère possédant un groupe acide, qui a un groupe acide, dans lequel ledit polymère basique est une polyaniline ou un dérivé de celle-ci, dans lequel le motif répétitif est représenté par la formule chimique (9) suivante : 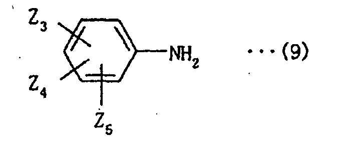 dans laquelle Z3 à Z5 sont des groupes fonctionnels qui sont indépendamment choisis parmi H, CH₃, C₂H₅, F, Cl, Br, I et Ph
ledit polymère possédant un groupe acide est représenté par l'une quelconque des formules chimiques (3) et (4) suivantes : 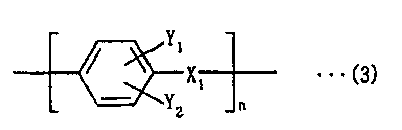 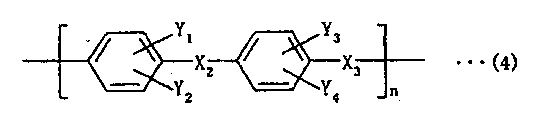 dans lesquelles X1, X2 et X3 sont l'un quelconque parmi S, SO₂, O, CO et CH₂, X2 et X3 peuvent être identiques l'un à l'autre ou différents l'un de l'autre, et au moins l'un parmi Y1, Y2, Y3 et Y4 est l'un quelconque parmi SO₃H, OPO(OH)₂ et PO(OH)₂,
et ledit groupe acide dudit polymère possédant un groupe acide existe en une quantité non inférieure à 3 x 10⁻³ mole par gramme dudit polymère possédant un groupe acide,
ledit procédé comprenant :
le mélange dudit polymère possédant un groupe acide, d'un monomère basique et d'un composé pour produire un ion métallique dans un solvant, ou le mélange d'un composé de complexe métallique composé d'un ion métallique et dudit polymère possédant un groupe acide et d'un monomère basique dans un solvant ;
la polymérisation dudit monomère basique pour produire ledit polymère basique et la compatibilisation dudit polymère basique et dudit polymère possédant un groupe acide pour produire un polymère compatibilisé ; et
la séparation dudit polymère compatibilisé à partir dudit solvant.

4. Procédé pour préparer ledit électrolyte polymère solide conducteur protonique (10) selon la revendication 3, dans lequel le nombre de moles dudit ion métallique n'est pas inférieur au nombre de moles dudit groupe acide dudit polymère possédant un groupe acide.

5. Procédé pour préparer ledit électrolyte polymère solide conducteur protonique (10) selon la revendication 3 ou 4, dans lequel ledit monomère basique mélangé dans ladite étape de mélange est ajouté en une quantité telle que le nombre de moles dudit monomère basique est non inférieur à 1/10 du nombre de moles dudit groupe acide dudit polymère possédant un groupe acide.

6. Procédé pour préparer ledit électrolyte polymère solide conducteur protonique (10) selon l'une quelconque des revendications 3 à 5, comprenant en outre une étape consistant à traiter thermiquement ledit polymère compatibilisé.

7. Procédé pour préparer ledit électrolyte polymère solide conducteur protonique (10) selon l'une quelconque des revendications 3 à 6, dans lequel un ion de métal alcalin ou un ion de métal alcalino-terreux est utilisé en tant que ledit ion métallique.

8. Procédé pour préparer ledit électrolyte polymère solide conducteur protonique (10) selon la revendication 7, dans lequel Li⁺, Na⁺ et/ou K⁺ est utilisé en tant que ledit ion de métal alcalin.

9. Procédé pour préparer ledit électrolyte polymère solide conducteur protonique (10) selon la revendication 7, dans lequel Ca²⁺ est utilisé en tant que ledit ion de métal alcalino-terreux.
